# EUROPÄISCHE PATENTSCHRIFT

(11) **EP 3 184 441 B1**
(45) Veröffentlichungstag und Bekanntmachung des Hinweises auf die Patenterteilung: **08.08.2018**
(21) Anmeldenummer: 16204295.6
(22) Anmeldetag: 15.12.2016
(51) Int. Cl.: B65B 25/06, B65B 61/28, B65B 11/50, B65B 65/06, B26D 7/30, G01G 19/00, G01G 19/414, G01G 21/23, B65B 51/14, B26D 7/32, B26D 1/15

(54) **SCHWEISSEINRICHTUNG MIT WAAGE**
WELDING DEVICE WITH A BALANCE
MACHINE À SOUDER COMPRENANT UNE BALANCE

(30) Priorität: 21.12.2015 AT 5022615 U
(43) Veröffentlichungstag der Anmeldung: 28.06.2017
(73) Patentinhaber: Kuchler, Fritz, 9020 Klagenfurt (AT)
(72) Erfinder: Kuchler, Fritz, 9020 Klagenfurt (AT)
(74) Vertreter: Speringer, Markus

(56) Entgegenhaltungen:
- EP-A1- 2 258 621
- EP-A2- 2 428 454
- EP-A2- 2 868 586
- EP-B1- 1 571 091
- AT-U1- 4 119
- US-A- 2 996 866
- US-A- 3 634 993

## Beschreibung

### Technisches Gebiet

Die Erfindung betrifft eine Schweißeinrichtung mit einer Waage zur Verpackung von Aufschnitten einer Aufschnittschneidemaschine, wobei die Schweißeinrichtung zum Verschweißen der Ränder einer auf einem Wiegeteller der Waage angeordneten und den Aufschnitt tragenden Basisfolie mit den Rändern einer Deckfolie über mehrere, insbesondere vier den Wiegeteller umrandende und gegen eine feststehende Basisfläche mit Heizelementen zangenartig umklappbare Leisten verfügt.

### Stand der Technik

Aus der EP 1571091 B1 ist eine Schweißeinrichtung zur Verpackung von Aufschnitten bekannt. Diese Schweißeinrichtung wird als Einzelgerät eingesetzt und auch unmittelbar im Ablegebereich in Aufschnittschneidemaschinen eingebaut. Insbesondere bei der letztgenannten Kombination hat man in die Schweißeinrichtung eine Waage integriert, sodass nach Kundenwunsch auf Grund einer Gewichtsvorgabe Wurst oder dergleichen aufgeschnitten und verpackt werden konnte. Bei Erreichen des gewünschten Gewichtes wurde der Schneidevorgang automatisch beendet und der Schweißvorgang gestartet. Als nachteilig für die Genauigkeit des Wiegeergebnisses hat sich erwiesen, dass die Basisfolie für den Aufschnitt über die Fläche des Wiegetellers der Waage hinaus bis über die Basisfläche unterhalb der umklappbaren Leisten ragte. Beim Wiegevorgang, nämlich beim Absenken des zentralen Wiegetellers im Ausmaß des gewichtsproportionalen Messweges unter die Ebene der umgebenden Basisfläche, ergab sich durch den randseitigen Überstand der Basisfolie über den Wiegeteller hinaus eine Reibungskomponente an den inneren Kanten der Basisfläche und in weiterer Folge eine leicht wannenförmigen Randverformung der Basisfolie, die das Wiegeergebnis verfälschte. Weiterhin ist aus EP 2 258 621 A1 eine Schweißvorrichtung zum Verpacken von Ausschnitten bekannt, die die Merkmale des Oberbegriffs des Anspruchs 1 aufweist.

### Kurzbeschreibung der Erfindung

Die Erfindung zielt darauf ab, eine Schweißeinrichtung der einleitend beschriebenen Art hinsichtlich der laufenden Erfassung des Verpackungsgewichtes zu verbessern.

Dies wird dadurch erreicht, dass die Oberfläche des Wiegetellers bzw. die Auflagefläche einer Basisfolie für den Aufschnitt mindestens um die durch den Messweg bedingte Absenkung höher angeordnet ist als die den Wiegeteller umgebende Basisfläche. Dadurch liegt der Rand der Basisfolie gewissermaßen frei auskragend und reibungsvermindert über der Basisfläche nächst den Leisten. Dieser Rand wird beim Wiegevorgang daher nicht über die Kanten der Basisfläche bei unter Last absinkendem Wiegeteller gezogen. Der Einfluss des Formänderungswiderstandes der Basisfolie auf das Wiegeergebnis kann auf diese Weise weitgehend eliminiert werden.

Es ist zweckmäßig, wenn die Oberfläche des Wiegetellers als gegebenenfalls abnehmbare Kunststoffplatte bzw. Kunststoffmatte insbesondere aus das Anhaften verstärkendem weichen Kunststoff ausgebildet ist. Diese Platte oder Matte kann formschlüssig und dadurch gegen Verrutschen gesichert auf dem Wiegeteller aufgelegt werden, der im unbelasteten Zustand mit der umgebenden Basisfläche in gleicher Ebene liegt. Die Oberfläche des Wiegetellers wird zumindest um das Maß des systembedingten Messweges erhöht, wenn die Wandstärke oder die Höhe der Kunststoffplatte oder -matte mindestens diesem Maß entspricht oder größer ist.

Insbesondere ist es zweckmäßig, wenn die Kunststoffplatte oder Kunststoffmatte eine strukturierte Oberfläche aufweist, die beispielsweise aus erhabenen Noppen oder Kreisringen gebildet ist. Durch diese Struktur verrutscht die Basisfolie auf der Platte oder Matte nicht, da die Flächenpressung örtlich höher ist als bei Vollauflage und sich eine geringfügige aber wirksame Wellung der Basisfolie mit einem Formschlusseffekt gegenüber der Unterlage ergibt. Außerdem kann sich beim Auflegen, etwa durch Abwerfen der Basisfolie kein Loftpolster unter der Basisfolie aufbauen und halten, da die Luft in den Bereichen zwischen den Noppen oder den Kreisringen zur Seite entweichen kann.

Bei einer Ausführung der Schweißeinrichtung mit Waage und mit einem die Basisfolie bzw. die fertige Verpackung untergreifenden Auswerfer sieht die Erfindung vor, dass in der Oberfläche insbesondere der Kunststoffplatte oder -matte Vertiefungen oder Freiräume zum Eintauchen und zur Aufnahme des Auswerfers vorgesehen sind, aus welchen der Auswerfer zusammen mit dem verpackten Aufschnitt in eine Abwurflage oder Schräglage hochklappbar ist, wobei an den Auswerfer eine Rampe oder Rutsche anschließt, die zu einem Sammelbehälter für die verpackten Aufschnitte führt. Der Auswerfer liegt also im Bereich des Wiegetellers unter der Oberfläche des Wiegetellers oder dessen Auflage und berührt in der Ruhelage weder die Basisfolie noch die seitlichen Wandbereiche der Vertiefungen oder Freiräume der Kunststoffplatte oder der Kunststoffmatte. Dadurch wird ein Messweg ohne Reibungsverluste und somit auch bei der Ausführung mit Auswerfer ein exaktes unverfälschtes Wiegeergebnis ermöglicht.

Es liegt die Oberfläche als Auflagefläche für die Basisfolie um den gesamten Messweg der Waage plus der Höhe oder Stärke des Auswerfers höher als die den Wiegeteller umgebende Basisfläche für das Verschweißen.

### Kurze Beschreibung der Zeichnungsfiguren

Ausführungsbeispiele des Erfindungsgegenstandes sind in den Zeichnungen schematisch dargestellt.
Fig. 1 zeigt eine Ansicht einer Aufschnittschneidemaschine mit Schweißeinrichtung und Waage vor dem Auflegen einer Basisfolie und des Aufschnittes,
Fig. 2 nur die Schweißeinrichtung mit Waage und mit einer fertigen Verpackung,
Fig. 3 eine Auflage in Form einer Kunststoffplatte bzw. -matte für den Wiegeteller mit Noppen im Schnitt nach der Linie III - III in Fig.4,
Fig.4 eine Draufsicht auf die Auflage nach Fig.3,
Fig.5 eine Variante zu Fig.3 als Schnitt nach der Linie V - V in Fig.6,
Fig.6 eine Draufsicht auf die Auflage nach Fig.5,
Fig.7 eine Prinzipdarstellung einer Schweißeinrichtung mit Waage und Auswerfer als Seitenansicht und
Fig.8 eine Draufsicht auf Fig.7.

### Beschreibung der Ausführungsarten

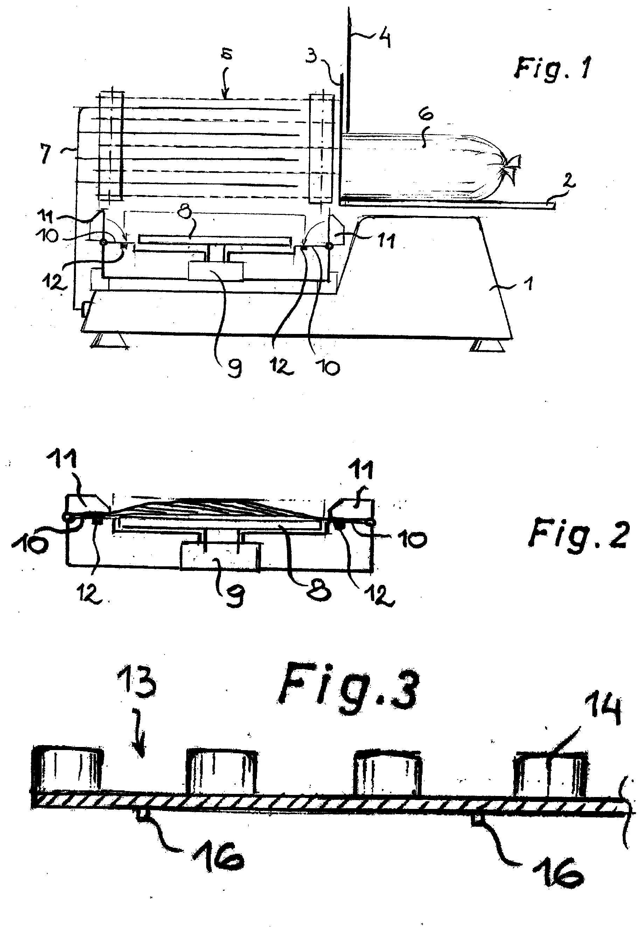

Gemäß Fig.1 umfasst eine Aufschnittschneidemaschine ein Gehäuse 1, auf welchem ein Schnittgutwagen 2 längs einer Anschlagplatte 3 gegen ein Kreismesser 4 reversierend verfahrbar ist. Die Spikes auf Ketten eines Kettenrahmens 5 übernehmen eine geschnittene Scheibe eines Schnittgutes 6 und ein Schläger 7 wirft diese Scheibe auf einen Wiegeteller 8 einer Waage 9. Der Wiegeteller 8 bildet einen Teil eines Auflegetabletts einer Schweißeinrichtung, die randseitig vier gegen eine Basisfläche 10 umklappbare Leisten 11 umfasst. Die Basisfläche 10 ist ortsfest und umgibt den vertikal beweglichen Wiegeteller 8 rahmenartig. Die Scheiben des Schnittgutes 6 werden auf eine vorab auf den Wiegeteller 8 gelegte Basisfolie abgeworfen, die über den Rand des Wiegetellers 8 hinaus ragt und sich über die rahmenartige feststehende Basisfläche 10 erstreckt. Bei den bekannten Ausführungen einer Schweißeinrichtung mit Waage im Ablegebereich einer Aufschnittschneidemaschine liegt die Oberfläche des unbelasteten Wiegetellers 8 in der Ebene der umrandenden Basisfläche 10. Bei Belastung des Wiegetellers 8 mit Schnittgutscheiben sinkt der Wiegeteller 8 sukzessive ab und zieht die Basisfolie über die inneren Kanten der Basisfläche 10 hinunter. Diese Formänderung der Basisfolie verfälscht das Wiegeergebnis. Die Waage 9 meldet für einen Aufschnitt ein geringeres Gewicht.

Wie aus Fig.1 ersichtlich, ist die Oberfläche des unbelasteten Wiegetellers 8 erfindungsgemäß um mehr als den Messweg des Wiegesystems höher angeordnet als die umgebende Basisfläche 10. Dadurch kommt es bei einer aufgelegten Basisfolie nicht zu dem reibungsbedingten Messfehler. Die Oberfläche des belasteten Wiegetellers 8 liegt nämlich stets oberhalb oder allenfalls in der Ebene der Basisfläche 10 und es kommt nicht zu einer konstruktiv erzwungenen tiefgezogenen wannenartigen Formänderung der Basisfolie beim Wiegevorgang.

Fig.2 zeigt die Schweißeinrichtung mit Waage 9 zusammen mit einer bereits verschweißten Packung. Ein Aufschnitt liegt auf einer Basisfolie und ist von einer Deckfolie abgedeckt. Die über der Basisfläche 10 liegenden Randbereiche der Basis - und der Deckfolie werden durch Umklappen der Leisten 11 gegen die beheizte Basisfläche 10 (Heizelemente 12) verschweißt. Gemäß Fig.2 liegt bei voller Belastung des Wiegetellers 8 dessen Oberfläche hier in der Ebene der umrandenden Basisfläche 10.

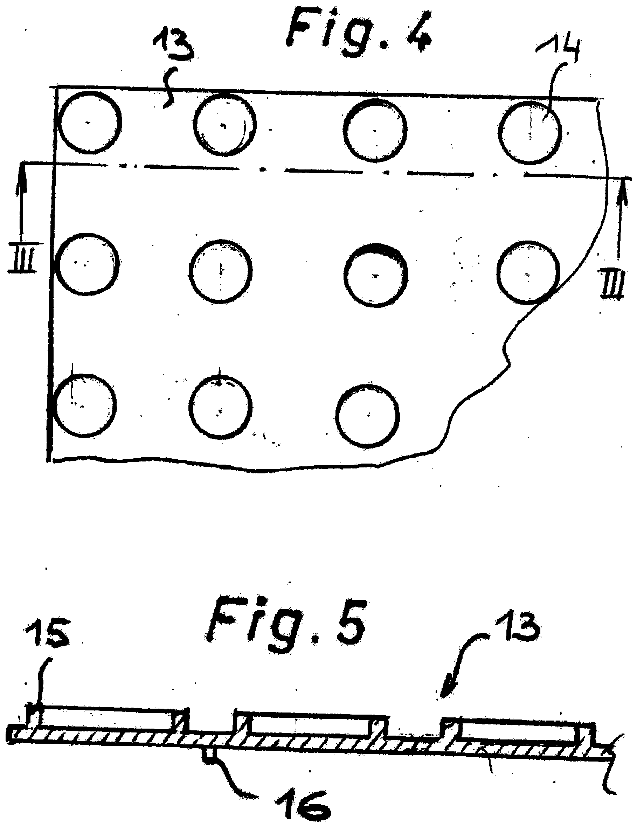

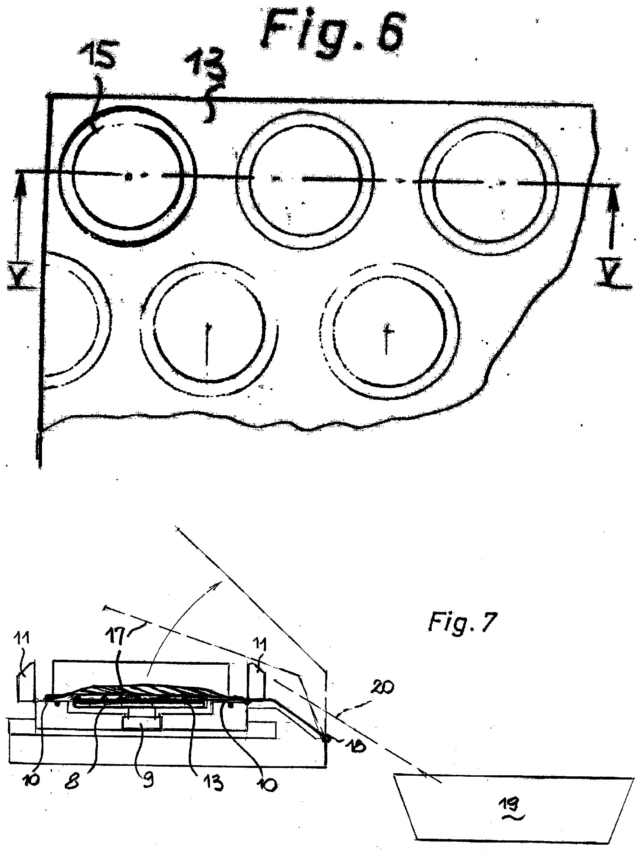

Die Erhöhung des Wiegetellers 8 um mindestens das Ausmaß des Messweges im Wiegesystem (z.B.4 mm)kann bei bekannten Ausführungen durch eine Auflage in Form einer Kunststoffplatte oder Kunststoffmatte erreicht werden. Fig. 3 und 4 zeigen eine weiche Kunststoffmatte 13 mit Noppen 14 in vergrößertem Maßstab. Eine Variante mit Kreisringen 15 ist in den Fig. 5 und 6 dargestellt. Diese Kunststoffmatten 13 tragen an den Unterseiten Formschlusselemente 16 (z.B. vorspringende Zapfen), die in Ausnehmungen im Wiegeteller 8 eingreifen und so eine formschlüssige Verbindung herstellen. Damit sind die Auflagen, hier die Kunststoffmatten 13, gegen Verrutschen auf dem Wiegeteller 8 gesichert. Die strukturierte Ausführung der Kunststoffmatten 13 an den Oberflächen verhindert einen Luftpolster beim raschen Auflegen der Basisfolie, da die Luft unterhalb der Basisfolie durch die Zwischenräume zwischen den Noppen 14 oder den Kreisringen viel schneller entweichen kann, als bei einer glatten Oberfläche des Wiegetellers. So wird wirksam verhindert, dass die Basisfolie kurz vor Erreichen der Soll-Position auf einem Luftpolster zur Seite abgleitet.

Fig.7 stellt die Schweißeinrichtung mit Waage 9 entsprechend der obigen Ausführungen zusammen mit einem Auswerfer 17 dar. Dieser ist im Ausführungsbeispiel aus Draht gebogen und um eine Achse 18 hochklappbar. Wie bekannt, wird ein hier nicht dargestellter Antrieb nach erfolgter Verschweißung der Basis- und Deckfolie aktiviert, um durch Hochklappen in die in Fig.7 strichliert dargestellten Schräglagen die fertige Packung aus der Schweißeinrichtung auszuheben und in einen Sammelbehälter 19 abgleiten zu lassen. Dazu ist noch eine Rutsche 20 im Übergangsbereich zwischen Auswerfer 17 und Sammelbehälter 19 vorgesehen. Ein Teil bzw. ein Einlaufbereich der Rutsche 20 kann auch auf dem Auswerfer 17 nächst der Achse 18 mit diesem mitschwenkend angeordnet sein.

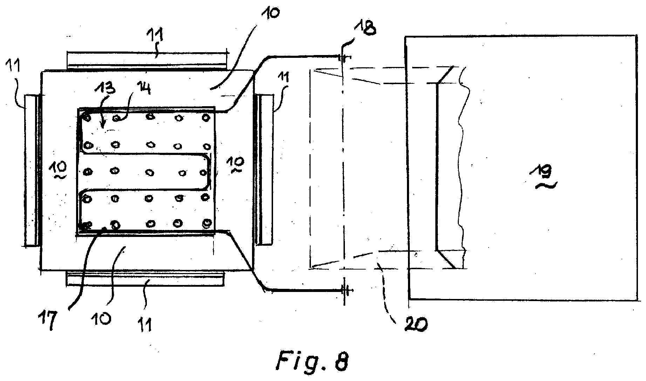

Wesentlich ist im Zusammenhang mit dem Auswerfer 17, dass dieser in Ausnehmungen des Wiegetellers 8 oder gemäß Fig. 7 und 8 in den Zwischenräumen zwischen den Strukturelementen (Noppen 14 oder Kreisringen 15) liegt und die Basisfolie untergreift. Dabei ist die Oberfläche des Wiegetellers 8 oder der Kunststoffmatte 13 um mindestens den Messweg des Wiegesystems plus der Drahtstärke des Auswerfers 17 im unbelasteten Zustand über der umgebenden Ebene der Basisfläche 10 angeordnet. Somit ist sicher gestellt, dass der Wiegevorgang auch unbehindert und kollisionsfrei bezüglich des Auswerfers 17 durchgeführt werden kann.

## Patentansprüche

1. Schweißeinrichtung mit Waage (9) zur Verpackung von Aufschnitten einer Aufschnittschneidemaschine, wobei die Schweißeinrichtung zum Verschweißen der Ränder einer auf einem Wiegeteller (8) der Waage (9) angeordneten und den Aufschnitt tragenden Basisfolie mit den Rändern einer Deckfolie über mehrere, insbesondere vier den Wiegeteller (8) umrandende und gegen eine feststehende Basisfläche (10) zangenartig umklappbare Leisten (11) mit Heizelementen (12) verfügt, **dadurch gekennzeichnet, dass** die Oberfläche des Wiegetellers (8) bzw. die Auflagefläche für die Basisfolie mindestens um die durch den Messweg des Wiegesystems bedingte Absenkung höher angeordnet ist, als die den Wiegeteller (8) umgebende Basisfläche(10).

2. Schweißeinrichtung nach Anspruch 1, **dadurch gekennzeichnet, dass** die Oberfläche des Wiegetellers (8) als gegebenenfalls abnehmbare Kunststoffplatte bzw. -matte (13), insbesondere aus das Anhaften verstärkendem weichen Kunststoff ausgebildet ist.

3. Schweißeinrichtung nach Anspruch 2, **dadurch gekennzeichnet, dass** die Kunststoffplatte oder-matte (13) eine strukturierte Oberfläche aufweist, die beispielsweise von erhabenen Noppen (14) oder Kreisringen (15) gebildet ist.

4. Schweißeinrichtung nach einem der Ansprüche 1 bis 3, mit einem in der Ebene der Oberfläche des Wiegetellers (8) angeordneten und aus dieser pultartig hochklappbaren Auswerfer (17) mit Gitterstruktur bzw. mit Zinken oder dergleichen, **dadurch gekennzeichnet, dass** in der Oberfläche, insbesondere in der Kunststoffplatte oder-matte (13), Vertiefungen bzw. Zwischenräume zum Eintauchen und zur Aufnahme des Auswerfers (17) vorgesehen sind, aus welchen der Auswerfer (17) zusammen mit dem verpackten Aufschnitt in eine Abwurflage bzw. Schräglage hochklappbar ist, wobei an den Auswerfer (17) eine Rampe oder Rutsche (20) anschließt, die zu einem Sammelbehälter (19) für die verpackten Aufschnitte führt.

5. Schweißeinrichtung nach Anspruch 4, **dadurch gekennzeichnet, dass** die Oberfläche mindestens um den Messweg der Waage (9) plus der Höhe des Auswerfers (17) höher positioniert ist, als die umgebende Basisfläche (10).

6. Schweißeinrichtung nach Anspruch 4, **dadurch gekennzeichnet, dass** die Rutsche (20) oder ein Einlaufteil derselben auf dem Auswerfer (17) nächst seiner Achse (18) mitschwenkend vorgesehen ist.

## Claims

1. Welding device with scale (9) for packaging cold cuts of a cold cut slicing machine wherein the welding device for welding the edges of a base foil arranged on a weighing plate (8) of the scale (9) and supporting the cold cuts with edges of a cover foil include several, particularly four borders, having heating elements (12) and surrounding the weighing plate (8) and being pincer-like foldable against a stationary base surface (10), **characterized in that** the surface of the weighing plate (8), or the supporting surface for the base foil, respectively, is arranged higher by the lowering caused by the measuring path of the weighing system than the base surface (10) surrounding the weighing plate (8).

2. Welding device according to claim 1, **characterized in that** the surface of the weighing plate (8) is formed as an optionally removable plastic plate or mat (13) particularly of soft plastic for reinforcing adhesion.

3. Welding device according to claim 2, **characterized in that** the plastic plate or mat (13) includes a structured surface which is formed for example by raised knobs (14) or circular rings (15).

4. Welding device according to any one of claims 1 to 3 with an ejector (17) arranged in the plane of the surface of the weighing plate (8), and from this desk-like upwardly foldable, with grid structure or with prongs or the like, **characterized in that** in the surface, in particular in the plastic plate or mat (13), depressions or gaps for immersion and for receiving the ejector (17) are provided, respectively, from which the ejector (17) along with the packaged cold cuts is upwardly foldable into a drop position or slope position wherein a ramp or slide (20) is joined to the ejector (17) which leads to a collecting container (19) for the packaged cold cuts.

5. Welding device according to claim 4, **characterized in that** the surface is higher positioned at least by the measuring path of the scale (9) plus the height of the ejector (17) than the surrounding base surface (10).

6. Welding device according to claim 4, **characterized in that** the slide (20) or an inlet part of the same is disposed on the ejector (17) next to its axis (18), pivoting with it.

## Revendications

1. Dispositif de soudage qui comporte une balance (9) et qui est destiné à emballer des aliments en tranches produits par une trancheuse de cuisine, le dispositif de soudage étant destiné à réaliser une soudure entre les bords d'une feuille de base disposée sur un plateau de pesée (8) de la balance (9) pour ainsi supporter l'aliment en tranches et les bords d'une feuille de couverture et étant pourvu, à cet effet, de plusieurs, notamment de quatre plinthes (11) qui comportent des éléments chauffants (12) et qui entourent le plateau de pesée (8) de manière à pouvoir être rabattues sur une surface de base (10) fixe pour faire l'effet d'une pince, **caractérisé en ce que** la surface du plateau de pesée (8) et/ou la surface sur laquelle repose la feuille de base est/sont disposée(s) à une hauteur dépassant celle de la surface de base (10) autour du plateau de pesée (8) de manière à compenser au moins l'abaissement provoqué par la course de mesure du système de pesée.

2. Dispositif de soudage selon la revendication 1, **caractérisé en ce que** la surface du plateau de pesée (8) est réalisée sous forme d'une plaque ou nappe en matière plastique (13) qui peut éventuellement être retirée et qui est notamment constituée d'une matière plastique souple augmentant adhérence.

3. Dispositif de soudage selon la revendication 2, **caractérisé en ce que** la plaque ou nappe en matière plastique (13) présente une surface structurée qui est formée, par exemple, de picots (14) saillants ou d'anneaux circulaires (15).

4. Dispositif de soudage selon l'une des revendications 1 à 3, comportant un éjecteur (17) qui est pourvu d'une structure en treillis et/ou de dents ou d'autres éléments apparentés et qui est disposé dans le plan de la surface du plateau de pesée (8) tout en pouvant la quitter en basculant vers le haut pour adopter une position inclinée, **caractérisé en ce que** la surface, notamment la plaque ou nappe en matière plastique (13) comporte des creux et/ou des interstices pouvant accueillir l'éjecteur (17) lorsque ce dernier s'y introduit et permettant à l'éjecteur (17) de les quitter, en emportant l'aliment en tranches emballé, pour basculer vers le haut dans une position de largage et/ou une position inclinée, une rampe ou un couloir de glissement (20) se trouvant dans le prolongement de l'éjecteur (17) et menant à un récipient de récupération (19) destiné aux aliments en tranches emballés.

5. Dispositif de soudage selon la revendication 4, **caractérisé en ce que** ladite surface peut être positionnée à une hauteur dépassant celle de la surface de base (10) environnante de manière à compenser au moins la course de mesure de la balance (9) et la hauteur de l'éjecteur (17).

6. Dispositif de soudage selon la revendication 4, **caractérisé en ce que** le couloir de glissement (20) ou une partie d'entrée de ce dernier est rattaché(e) à l'éjecteur (17) de manière à se trouver à proximité de son axe (18) et suivre son basculement.
